# EUROPÄISCHE PATENTANMELDUNG

(11) **EP 2 316 878 A1**
(43) Veröffentlichungstag der Anmeldung: **04.05.2011**
(21) Anmeldenummer: 10177522.9
(22) Anmeldetag: 20.09.2010
(51) Int. Cl.: C08K 13/02, C08L 23/00, C08L 25/00, C08L 67/00, C08L 77/00, C08K 3/04, C08K 3/10, C08K 5/3445, C08K 7/04, C08L 9/06, C08L 23/16, C08L 27/12

(54) **Elektrisch leitfähiger Polymerwerkstoff**

(30) Priorität: 28.10.2009 DE 102009044345
(71) Anmelder: ContiTech AG, 30165 Hannover (DE)
(72) Erfinder: Sostmann, Stefan, 30855, Langenhagen (DE); Seibold, Sebastian, 34346, Hannoversch Münden (DE)
(74) Vertreter: Finger, Karsten

(57) **Zusammenfassung**

Die Erfindung betrifft einen Polymerwerkstoff, dem ein elektrisch leitfähiger Zusatz beigemischt ist.

Von erfindungswesentlicher Bedeutung ist, dass der Polymerwerkstoff zusätzlich eine ionische Flüssigkeit enthält.

Dieses Werkstoffkonzept ist insbesondere bei Elastomeren, thermoplastischen Elastomeren und Thermoplasten anwendbar.

## Beschreibung

### Elektrisch leitfähiger Polymerwerkstoff

Die Erfindung betrifft einen Polymerwerkstoff, dem ein elektrisch leitfähiger Zusatz beigemischt ist. Ein derartiger Polymerwerkstoff wird für viele technische Anwendungen benutzt, insbesondere bei Schläuchen und mehrschichtigen Stoffbahnen zur Bildung von flexiblen Behältern, Planen, Schutzanzügen und dergleichen, wobei beispielsweise auf folgende Patentliteratur verwiesen wird:

| Schläuche | Mehrschichtige Stoffbahnen |
|---|---|
| DE 197 24 038 C1 | DE 10 2007 002 521 B4 |
| DE 10 2008 014 988 A1 | JP 08183866 A |
| EP 0 582 301 A1 | |
| US 5 718 957 | |

In der Offenlegungsschrift WO 2009/003853 A2 wird im Rahmen einer neueren Entwicklung ein Dehnungs-Sensor als integriertes Bauteil eines elastischen Artikels vorgestellt, der einen Polymerwerkstoff umfasst, der mit einem elektrisch leitfähigen Zusatz versehen ist. Der Dehnungs-Sensor wirkt derart, dass er statische und dynamische Dehnungen des Artikels in Relation zu den wirkenden Kräften misst und zudem Veränderungen des Polymerwerkstoffes aufgrund der statischen und dynamischen Dehnungen des Artikels über die Zeit verfolgt. Der polymere Dehnungs-Sensor kann Bauteil sein:
- eines Schlauches (Kraftfahrzeugschlauch, Schwimmschlauch etc.);
- eines Luftfederbalges (Axialbalg, Kreuzlagenbalg) oder Kompensators;
- eines Antriebsriemens (Flachriemen, Keilriemen, Keilrippenriemen, Zahnriemen);
- eines Fördergurtes (Textilgurt, Stahlseilgurt) und einer Fördergurtverbindung;
- eines Reifens;
- eines Stoffes, insbesondere eines Behälterstoffes;
- einer Innenraumverkleidung, insbesondere eines Airbag-Systems.

Bisheriger Einsatzschwerpunkt ist dabei der Luftfederbalg.

Darüber hinaus wird das Thema "Zusatzstoffe für Kunststoffe", betreffend Antistatika in Plastverarbeiter 28. Jahrgang 1977, Nr. 5, Seite 247 beschrieben.

Als elektrisch leitfähige Zusätze kommen insbesondere zur Anwendung:
- Rußpartikel
- Kohlefasern
- Carbon Nanotubes (CNT); US 7 338 648 B2
- Metallpartikel
- Metallfasern
- Leitfähige Polymere, beispielsweise ein Polyethylenglykolester oder ein Polyethylenglykolcarbonsäureester

Die bislang meisten Untersuchungen betreffen den Werkstoff Gummi (Elastomer), basierend auf einer vulkanisierten thermoplastfreien Kautschukmischung, verbunden bislang mit einer eingeschränkt erzielbaren Leitfähigkeit. Hauptgrund hierfür ist, dass man nur schwer Kontakt zwischen den Zusätzen im Gummi erzeugen kann, um so durchgehende Leitungspfade zu ermöglichen. Zumeist verbleibt Kautschuk zwischen den einzelnen leitfähigen Domänen, was die gesamt erreichbare Leitfähigkeit stark einschränkt. Dies kann man jedoch nur durch sehr hohe Füllgrade an leitfähigem Zusatz umgehen, was wiederum sehr stark die eigentlichen Gummieigenschaften verändert und oft zu technisch nicht mehr nutzbaren, beispielsweise zu harten oder zu wenig elastischen Rezepturen führt.

In der Offenlegungsschrift DE 10 2008 014 988 A1 wird im Rahmen einer weiteren neuen Entwicklung ein "Full-Ohm"-Schlauch mit Einsatz als Chemikalienschlauch, Treibstoffschlauch, Lebensmittelschlauch und Pharmaschlauch beschrieben. Der Schlauch besteht dabei wenigsten aus:
- einer Innenschicht (Inliner) aus Kunststoff, der beständig gegenüber dem fördernden Medium ist, insbesondere in Form einer PTFE-Folie;
- einer oder mehreren elastomeren Zwischenschicht/en, wobei eine Zwischenschicht in direkter Verbindung mit der Innenschicht steht;
- einer oder mehreren eingebetteten Festigkeitsträgerschicht/en sowie
- einer abriebfesten elastomeren Außenschicht.

Die Innenschicht besteht dabei aus einem elektrisch leitfähigen oder elektrisch leitfähig einstellbaren Kunststoff durch Einmischung eines elektrisch leitfähigen Zusatzes. Die Schwierigkeit liegt dabei in der bevorzugten Folienbildung in einer Stärke von 0,01 mm bis 3 mm. Die Folienbildung wird erschwert, wenn der leitfähige Zusatz in zu hohen Mengen eingesetzt wird. Zusätzlich werden die elastomere/n Zwischenschicht/en und die elastomere Außenschicht mit elektrisch leitfähigen Zusätzen im Rahmen der bereits oben erwähnten Kautschukmischungsherstellung versehen, und zwar unter Ausbildung des "Full-Ohm"-Schlauches.

Die Herstellung elektrisch leitfähiger Thermoplaste, insbesondere in Form dünner Folien, bildet einen neueren Entwicklungssektor, der noch nicht abgeschlossen ist.

Die Aufgabe der Erfindung besteht nun darin, einen Polymerwerkstoff bereitzustellen, bei dem durch das Beimischen eines elektrisch leitfähigen Zusatzes keine Nachteile im Hinblick auf andere geforderte Eigenschaften, beispielsweise Elastizität, auftreten, und zwar selbst bei einem hohen Füllungsgrad an dem leitfähigen Zusatz. Darüber hinaus soll das Werkstoffkonzept einem breiten Spektrum an Polymertypen zugänglich sein.

Gelöst wird diese Aufgabe dadurch, dass der Polymerwerkstoff zusätzlich eine ionische Flüssigkeit enthält.

Ionische Flüssigkeiten sind als Zusätze in Elastomeren bekannt. Sie werden oft als Weichmacher-Ersatzstoffe beschrieben und haben einen kleinen, wenn auch im Effekt beschränkten, positiven Einfluss auf die Leitfähigkeit der Gummirezepturen. Um alleine mit ionischen Flüssigkeiten leitfähige Rezepturen herstellen zu wollen, müsste man sehr hohe Füllgrade an ionischer Flüssigkeit realisieren, was wiederum die Grundeigenschaften zu stark negativ beeinflussen würde.

Unter diesem Aspekt war es überraschend festzustellen, dass bei einer Kombination eines elektrisch leitfähigen Zusatzes mit einer ionischer Flüssigkeit, und zwar bei Erhalt der geforderten Grundeigenschaften, eine Verbesserung der elektrischen Leitfähigkeit des Polymerwerkstoffes eintritt. Dabei wird davon ausgegangen, dass die bislang bekannte Beschränkung der Leitfähigkeit auf dem unterbrochenen Kontakt der leitfähigen Domänen im Polymerwerkstoff basiert. Dadurch müssen die Elektronen zwischen diesen Domänen springen ("Tunneln von Elektronen"), was energetisch sehr ungünstig ist und die Zahl der geleiteten Elektronen und damit die makroskopisch beobachtete Leitfähigkeit einschränkt. Die ionische Flüssigkeit erzeugt nun im Polymerwerkstoff ein ionisches Milieu, das diese Elektronensprünge vereinfacht. Dadurch dass man eine ionische Flüssigkeit als Weichmacherersatz einsetzen kann, und zwar mit ähnlichen Eigenschaften wie bei einem Standard-Weichmacher (z.B. mineralische Öle), erfahren die meisten Polymerrezepturen, insbesondere Gummirezepturen, durch den Einsatz der ionischen Flüssigkeit keinerlei Änderungen ihrer physikalischen Eigenschaften.

Die optimale Wirkung wird dabei erreicht, wenn der Mengenanteil an der ionischen Flüssigkeit niedriger ist als der Mengenanteil an dem elektrisch leitfähigen Zusatz.

Hinsichtlich des Polymerwerkstoffes kommen insbesondere folgende Werkstoffvarianten zur Anwendung:

### - Variante A

Der Polymerwerkstoff ist eine vulkanisierte thermoplastfreie Kautschukmischung (Elastomer), enthaltend:
a) wenigstens eine Kautschukkomponente;
b) einen elektrisch leitfähigen Zusatz;
c) eine ionische Flüssigkeit sowie
d) weitere Mischungsingredienzien.

Als Kautschukkomponenten sind insbesondere zu nennen:
Ethylen-Propylen-Kautschuk (EPM)
Ethylen-Propylen-Dien-Kautschuk (EPDM)
Nitrilkautschuk (NBR)
(teil)hydrierter Nitrilkautschuk (HNBR)
Fluor-Kautschuk (FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Ethylen-Acrylat-Kautschuk (AEM)
Silikonkautschuk (MQ, VMQ, PVMQ, FVMQ; DE 10 2006 058 470 A1)
Fluorierter Methylsilikonkautschuk (MFQ)
Perfluorinierter Propylen-Kautschuk (FFPM)
Perfluorcarbon-Kautschuk (FFKM)
Polyurethan (PU)

Die vorgenannten Kautschuktypen können unverschnitten sein. Auch der Einsatz eines Verschnittes, insbesondere in Verbindung mit einem der vorgenannten Kautschuktypen, beispielsweise ein NR/BR-Verschnitt oder ein BR/SBR-Verschnitt, ist möglich.

Von besonderer Bedeutung sind: EPM, EPDM, SBR, BR, CR, NR, NBR, HNBR, FKM, ACM oder AEM.

Der Kautschukmischung ist der elektrisch leitfähige Zusatz beigemischt, und zwar als Metallfasern und/oder Kohlefasern und/oder Metallpartikel und/oder Rußpartikel und/oder Carbon Nanotubes (CNT) und/oder leitfähige Polymere. Von besonderer Bedeutung sind Metallfasern und/oder Kohlefasern, die bei einer Faserlänge von ≤ 8 mm, insbesondere ≤ 6 mm, als Kurzfasern vorliegen. Besonders gute Ergebnisse werden bei Einsatz von Kurzfasern aus Kupfer (Cu) erzielt. Der elektrisch leitfähige Zusatz ist in einer Menge von 50 phr bis 200 phr, insbesondere von 100 phr bis 200 phr, insbesondere wiederum von 150 phr bis 200 phr, beigemischt.

Von erfindungswesentlicher Bedeutung ist die zusätzliche Beimischung einer ionischen Flüssigkeit, insbesondere aus der Gruppe der Imidazoliumhalogenide, insbesondere in Form der Imidazoliumchloride. Besonders zu erwähnen ist dabei der Einsatz von Methyloctylimidazoliumchlorid und/oder Allylmethylimidazoliumchlorid. Der Mengenanteil an ionischer Flüssigkeit beträgt vorzugsweise 5 phr bis 30 phr, insbesondere 5 phr bis 15 phr, insbesondere wiederum 10 phr bis 15 phr.

Die weiteren üblichen Mischungsingredienzien umfassen wenigstens einen Vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoff (z.B. Farbpigmente, Verstärkungsfasern). Diesbezüglich wird auf den allgemeinen Stand der Kautschukmischungstechnologie verwiesen.

### - Variante B

Der polymere Werkstoff ist ein thermoplastisches Vulkanisat (thermoplastisches Elastomer, Kurzbezeichnung TPE), enthaltend:
a) wenigstens eine Thermoplastkomponente;
b) wenigstens eine Kautschukkomponente, die zumindest teilvernetzt ist;
c) einen elektrisch leitfähigen Zusatz;
d) eine ionische Flüssigkeit sowie
e) weitere Mischungsingredienzien.

Die bevorzugten Thermoplastkomponenten sind ein:
Polyolefin, insbesondere Polyethylen (PE) oder Polypropylen (PP);
Polystyrol;
Polyamid (PA), beispielsweise PA6 oder PA6.6;
Polyester (PES).

Als Kautschukkomponenten sind insbesondere EPM, EPDM, SBR, CR, NR, NBR, FKM, ACM oder AEM zu nennen, die insbesondere mit keiner weiteren Kautschukkomponente verschnitten sind.

Hinsichtlich des elektrisch leitfähigen Zusatzes wird auf das verwiesen, was im Zusammenhang mit der Werkstoffvariante A bereits ausgeführt wurde. Der Mengenanteil an elektrisch leitfähigem Zusatz beträgt 3 Gew.-% bis 30 Gew.-%, insbesondere 5 Gew.-% bis 20 Gew.-%, insbesondere wiederum 5 Gew.-% bis 15 Gew.-%.

Erfindungswesentlich ist auch hier die zusätzliche Beimischung der ionischen Flüssigkeit mit den bereits erwähnten bevorzugten Typen. Der Mengenanteil an ionischer Flüssigkeit beträgt 1 Gew.-% bis 10 Gew.-%, insbesondere 1 Gew.-% bis 5 Gew.-%, insbesondere wiederum 1 Gew.-% bis 3 Gew.-%.

Hinsichtlich der weiteren üblichen Mischungsingredienzien wird auf die Mischungstechnologie zu der Variante A, insbesondere auf die Lehre gemäß der Offenlegungsschrift DE 100 04 632 A1 verwiesen.

### - Variante C

Der Polymerwerkstoff ist ein thermoplastischer Kunststoff (Thermoplast), enthaltend:
a) wenigstens eine Thermoplastkomponente;
b) einen elektrisch leitfähigen Zusatz;
c) eine ionische Flüssigkeit sowie
d) gegebenenfalls weitere Mischungsingredienzien.

Die bevorzugten Thermoplastkomponenten sind ein:
Polyolefin, insbesondere Polyethlen (PE) oder Polypropylen (PP);
Polyamid (PA), beispielsweise PA6 oder PA6.6;
Fluorkunststoff, insbesondere Polytetrafluorethylen (PTFE).

Als elektrisch leitfähiger Zusatz werden hier insbesondere Rußpartikel und/oder CNT eingesetzt. Werden helle thermoplastische Kunststoff gefordert, so kommen insbesondere leitfähige Polymere zum Einsatz, beispielsweise ein Polyethylenglykolester und/oder ein Polyethylenglykolcarbonsäureester. Der elektrisch leitfähige Zusatz ist in einer Menge von 1 Gew.-% bis 20 Gew.-%, insbesondere von 2 Gew.-% bis 15 Gew.-%, insbesondere wiederum von 2 Gew.-% bis 10 Gew.-%, beigemischt. Im Hinblick auf die Herstellung einer Folie, insbesondere einer PTFE-Folie, bei einer Stärke von 0,01 mm bis 3 mm sind 2 Gew.-% bis 5 Gew.-% ausreichend, insbesondere unter dem Aspekt der Verarbeitbarkeit.

Erfindungswesentlich ist auch hier die zusätzliche Beimischung der ionischen Flüssigkeit mit den bereits erwähnten bevorzugten Typen. Der Mengenanteil an ionischer Flüssigkeit beträgt 0,5 Gew.-% bis 10 Gew.-%, insbesondere 1 Gew.-% bis 5 Gew.-%, insbesondere wiederum 1 Gew.-% bis 3 Gew.-%.

Die weiteren Mischungsingredienzien können beispielsweise Farbpigmente und/oder Verstärkungsfasern sein.

Im Rahmen einer Versuchsdurchführung werden nun fünf vulkanisierte thermoplastfreie Kautschukmischungen I bis V miteinander verglichen, wobei die Tabelle 1 die Zusammensetzungen der jeweils peroxidisch vernetzten Kautschukmischungen in phr (per hundred rubber) und die Tabelle 2 die entsprechenden Ergebnisse festhalten.

**Tabelle 1**

| **Mischungsbestandteile** | **I** | **II** | **III** | **IV** | **V** |
|---|---|---|---|---|---|
| EPDM (Keltan 740) | 100 | 100 | 100 | 100 | 100 |
| Ruß | | | | | |
| N339 | 25 | 25 | 25 | 25 | 25 |
| N550 | 30 | 30 | 30 | 30 | 30 |
| Acrylsäureester-Weichmacher | 15 | 15 | 15 | 15 | 15 |
| Carbonsäureester-Weichmacher | 10 | - | - | - | - |
| Magnesiumoxid | 5 | 5 | 5 | 5 | 5 |
| Stearinsäure | 1 | 1 | 1 | 1 | 1 |
| Zinkoxid | 5 | 5 | 5 | 5 | 5 |
| Peroxid-Vernetzer | | | | | |
| (Perkadox 14-40 GR) | 7 | 7 | 7 | 7 | 7 |
| Cu-Kurzfasern (≤ 6 mm) | 150 | 150 | 150 | 100 | 200 |
| Methyloctylimidazoliumchlorid | - | 10 | - | - | - |
| Allylmethylimidazoliumchlorid | - | - | 10 | 10 | 10 |

Die Herstellung des Vulkanisates erfolgte nach folgenden Verfahrensschritten:
- Die Kautschukmischungen wurden nach dem Standardmischverfahren in einem Innenmischer gemischt.
- Als Metallfasern wurden Cu-Kurzfasern der Firma Stax, Deutsches Metallfaserwerk Dr. Schwabbauer GmbH & Co. (Neidenstein) verwendet, wobei die Cu-Fasern im ersten Schritt in die jeweilige Kautschukmischung eingemischt wurden.
- Die Kautschukmischungen wurden abschließend 10 Minuten bei 180 °C vulkanisiert.

Von den Vulkanisaten I bis V wurden Untersuchungen im Hinblick auf die Härte, Oberflächenwiderstand und Durchgangswiderstand durchgeführt, wobei die Ergebnisse in der Tabelle 2 festgehalten sind.

**Tabelle 2**

| **Prüfkriterien** | **I** | **II** | **III** | **IV** | **V** |
|---|---|---|---|---|---|
| Härte [Shore A] | 76 | 72 | 75 | 80 | 77 |
| Oberflächenwiderstand nach | | | | | |
| DIN/IEC93 und DIN/IEC167 [kOhm] | 535,0 | 8,8 | 6,0 | 380,0 | 2,8 |
| Durchgangswiderstand nach | | | | | |
| DIN/IEC93 und DIN/IEC167 [kOhm] | 490,00 | 1,68 | 1,59 | 205,00 | 0,48 |

Die wesentlichen Gesichtspunkte der Ergebnisse sind:
- Werden bei der Kautschukmischung I 10 phr Carbonsäureester-Weichmacher durch 10 phr einer ionischen Flüssigkeit in Form von Methyloctylimidazoliumchlorid (Mischung II) oder Allylmethylimidazoliumchlord (Mischungen III bis V) ersetzt, so tritt eine deutliche Reduzierung des Oberflächenwiderstandes und Durchgangswiderstandes auf.
- Den geringsten Oberflächenwiderstand und Durchgangswiderstand erhält man in Anwesenheit einer ionischen Flüssigkeit bei einem Cu-Kurzfaseranteil von 150 phr bis 200 phr (Mischungen II, III und V), wobei der beste Wert bei 200 phr an Cu-Kurzfasern (Mischung V) erzielt wird.

Zusammenfassend bleibt folgendes festzuhalten:
Die Leitfähigkeit eines Polymerwerkstoffes kann durch die synergetische Kombination von leitfähigen Zusätzen mit ionischen Flüssigkeiten deutlich verbessert werden bzw. gezielt auf hochleitfähige Rezepturen hin entwickelt werden. Dabei werden die physikalischen Niveaus nur durch die leitfähigen Zusätze verändert. Der synergetische Effekt mit den ionischen Flüssigkeiten führt jedoch kaum noch zu Änderungen der physikalischen Eigenschaften.

## Patentansprüche

1. Polymerwerkstoff, dem ein elektrisch leitfähiger Zusatz beigemischt ist, **dadurch gekennzeichnet, dass** der Polymerwerkstoff zusätzlich eine ionische Flüssigkeit enthält.

2. Polymerwerkstoff nach Anspruch 1, **dadurch gekennzeichnet, dass** der Mengenanteil an der ionischen Flüssigkeit geringer ist als der Mengenanteil an dem elektrisch leitfähigen Zusatz.

3. Polymerwerkstoff nach Anspruch 1 oder 2, **dadurch gekennzeichnet, dass** der Polymerwerkstoff eine vulkanisierte thermoplastfreie Kautschukmischung ist, enthaltend:
- wenigstens eine Kautschukkomponente;
- einen elektrisch leitfähigen Zusatz;
- eine ionische Flüssigkeit sowie
- weitere Mischungsingredienzien.

4. Polymerwerkstoff nach Anspruch 3, **dadurch gekennzeichnet, dass** die Kautschukkomponente Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Butadien-Kautschuk (BR), Chloriertes Polyethylen (CM), Chlorsulfoniertes Polyethylen (CSM), Polyepichlorhydrin (ECO), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM) oder Polyurethan (PU) ist, wobei die vorgenannten Kautschuktypen verschnittfrei oder in einem Verschnitt, insbesondere in Verbindung mit einem der vorgenannten Kautschuktypen, zum Einsatz gelangen.

5. Polymerwerkstoff nach Anspruch 3 oder 4, **dadurch gekennzeichnet, dass** der elektrisch leitfähige Zusatz in einer Menge von 50 phr bis 200 phr beigemischt ist.

6. Polymerwerkstoff nach einem der Ansprüche 3 bis 5, **dadurch gekennzeichnet, dass** die ionische Flüssigkeit in einer Menge von 5 phr bis 30 phr beigemischt ist.

7. Polymerwerkstoff nach Anspruch 1 oder 2, **dadurch gekennzeichnet, dass** der Polymerwerkstoff ein thermoplastisches Vulkanisat ist, enthaltend:
- wenigstens eine Thermoplastkomponente;
- wenigstens eine Kautschukkomponente, die zumindest teilvernetzt ist;
- einen elektrisch leitfähigen Zusatz;
- eine ionische Flüssigkeit sowie
- weitere Mischungsingredienzien.

8. Polymerwerkstoff nach Anspruch 7, **dadurch gekennzeichnet, dass** die Thermoplastkomponente ein Polyolefin, Polystyrol, Polyamid (PA) oder ein Polyester (PES) ist.

9. Polymerwerkstoff nach Anspruch 7 oder 8, **dadurch gekennzeichnet, dass** die Kautschukkomponente EPM, EPDM, SBR, CR, NR, NBR, FKM, ACM oder AEM ist.

10. Polymerwerkstoff nach einem der Ansprüche 7 bis 9, **dadurch gekennzeichnet, dass** der elektrisch leitfähige Zusatz in einer Menge von 3 Gew.-% bis 30 Gew.-% beigemischt ist.

11. Polymerwerkstoff nach einem der Ansprüche 7 bis 10, **dadurch gekennzeichnet, dass** die ionische Flüssigkeit in einer Menge von 1 Gew.-% bis 10 Gew.-% beigemischt ist.

12. Polymerwerkstoff nach Anspruch 1 oder 2, **dadurch gekennzeichnet, dass** der Polymerwerkstoff eine thermoplastischer Kunststoff ist, enthaltend:
- wenigstens eine Thermoplastkomponente;
- einen elektrisch leitfähigen Zusatz;
- eine ionische Flüssigkeit sowie
- gegebenenfalls weitere Mischungsingredienzien.

13. Polymerwerkstoff nach Anspruch 12, **dadurch gekennzeichnet, dass** die Thermoplastkomponente ein Polyolefin, ein Polyamid (PA) oder ein Fluorkunststoff ist.

14. Polymerwerkstoff nach Anspruch 12 oder 13, **dadurch gekennzeichnet, dass** der elektrisch leitfähige Zusatz in einer Menge von 1 Gew.-% bis 20 Gew.-% beigemischt ist.

15. Polymerwerkstoff nach einem der Ansprüche 12 bis 14, **dadurch gekennzeichnet, dass** die ionische Flüssigkeit in einer Menge von 0,5 Gew.-% bis 10 Gew.-% beigemischt ist.

16. Polymerwerkstoff nach einem der Ansprüche 1 bis 15, **dadurch gekennzeichnet, dass** der elektrisch leitfähige Zusatz in Form von Metallfasern und/oder Kohlefasern und/oder Metallpartikel und/oder Rußpartikel und/oder Carbon Nanotubes (CNT) und/oder von leitfähigen Polymeren vorliegt.

17. Polymerwerkstoff nach Anspruch 16, **dadurch gekennzeichnet, dass** die Metallfasern und/oder Kohlefasern als Kurzfasern vorliegen.

18. Polymerwerkstoff nach einem der Ansprüche 1 bis 17, **dadurch gekennzeichnet, dass** die ionische Flüssigkeit eine Substanz aus der Gruppe der Imidazoliumhalogenide ist.

19. Polymerwerkstoff nach Anspruch 18, **dadurch gekennzeichnet, dass** die ionische Flüssigkeit eine Substanz aus der Gruppe der Imidazoliumchloride ist

20. Polymerwerkstoff nach Anspruch 19, **dadurch gekennzeichnet, dass** die ionische Flüssigkeit Methyloctylimidazoliumchlorid und/oder Allylmethylimidazoliumchlorid ist.
